# EUROPÄISCHE PATENTSCHRIFT

(11) **EP 3 084 930 B1**
(45) Veröffentlichungstag und Bekanntmachung des Hinweises auf die Patenterteilung: **31.01.2018**
(21) Anmeldenummer: 14816300.9
(22) Anmeldetag: 22.12.2014
(51) Int. Cl.: H02K 15/04, H02K 15/06, H02K 3/28

(54) **VERFAHREN ZUR HERSTELLUNG EINER MEHRPHASIGEN WICKLUNG FÜR EINEN STATOR EINER ELEKTRISCHEN MASCHINE**
METHOD FOR PRODUCING A MULTI-PHASE WINDING FOR A STATOR OF AN ELECTRICAL MACHINE
PROCÉDÉ DE FABRICATION D'UN ENROULEMENT POLYPHASÉ POUR UN STATOR D'UNE MACHINE ÉLECTRIQUE

(30) Priorität: 20.12.2013 DE 102013226875
(43) Veröffentlichungstag der Anmeldung: 26.10.2016
(73) Patentinhaber: SEG Automotive Germany GmbH, 70499 Stuttgart (DE)
(72) Erfinder: WOLF, Gert, 71563 Affalterbach (DE); DIDRA, Steffen, 71696 Moeglingen (DE); HERBOLD, Klaus, 71679 Asperg (DE); SCHWARZKOPF, Christoph, 74399 Walheim (DE); KREUZER, Helmut, 71701 Schwieberdingen (DE)
(74) Vertreter: Steinbauer, Florian
(86) Internationale Anmeldenummer: PCT/EP2014/079035
(87) Internationale Veröffentlichungsnummer: WO 2015/092069

(56) Entgegenhaltungen:
- EP-A1- 0 818 874
- DE-A1- 19 817 304
- DE-A1-102004 059 087
- GB-A- 2 160 797
- US-A1- 2004 216 302

## Beschreibung

### Stand der Technik

Die Erfindung geht von einem Verfahren zur Herstellung einer Wicklung für den Stator einer elektrischen Maschine, insbesondere eines Drehstromgenerators für Kraftfahrzeuge, aus.

Aus den Dokumenten DE 10 2008 018 971 A1 und JP 56094948 sind Verfahren zur Herstellung von Wicklungen in Ständern bekannt, die mittels eines Einzugsverfahrens in den Ständern hineingezogen werden.

Die ausgereifte Fertigungstechnik ist mit kurzen Taktzeiten bei der Herstellung der Wicklungsvor- bzw. -Zwischenstufe insbesondere für die Serienfertigung von großen Stückzahlen geeignet. Die Phasen einer Wicklung werden dabei einzeln gewickelt und nacheinander eingezogen. Zwischen den Einzugsvorgängen erfolgt ein Prägeschritt, bei dem die Spulenköpfe der bereits eingezogenen Phasen nach radial außen gedrückt werden, um Platz für die nachfolgenden Phasen zu schaffen. Deshalb benötigen eingezogene Wicklungen relativ lange Wickelköpfe. Darüber hinaus führt die schichtweise Anordnung der Phasen zu einer ungleichmäßigen Temperaturverteilung im Ständer.

Aus der DE 27 50 112 C2 ist eine Wellenwicklung bekannt, die in Halbphasentechnik als Halbphasenwicklung ausgeführt ist. Es wird dort ein dreiphasiges System verwendet.

Dabei werden die sechs halben Phasen einzeln und nacheinander mit einer entsprechenden Einrichtung (Wickelkopf) direkt in das Ständereisen bewickelt.

Bei diesem Vorgehen müssen die beiden Halbphasen der Wellenwicklung (Vorwärts- und Rückwärtswicklung) nachträglich miteinander verbunden werden, am fertigen Ständer sind deshalb beim 3-Phasen-System drei Schaltpunkte (Schweißstellen) sichtbar. Die vorhandene Fertigungstechnik ist auf einen parallelen Draht und elektrische Füllfaktoren von maximal 35% begrenzt, allerdings können die Wickelköpfe im Vergleich zur Einzugstechnik relativ kurz ausgeführt werden. Bei Lenkhilfemotoren werden einzelne Phasen als Schleifenwicklung vorgefertigt und nacheinander in Schichten übereinander ins Einziehwerkzeug eingelegt. Der Einziehvorgang erfolgt dann für alle Phasen gemeinsam in einem Schritt. Das Zwischenprägen entfällt, weshalb auch hier die Wickelköpfe entsprechend kürzer ausgeführt werden können.

Aus dem Dokument DE 198 17 304 A1 ist bekannt, einzelne Stränge und deren Teilstränge jeweils für sich in die entsprechenden Nuten eines Ständereisens einzufügen. Andere Stränge mit ihren Halbwicklungen werden in nachfolgenden Schritten separat in ein Ständereisen eingefügt.

Aus der DE 10 2004 059 087 A1 ist bekannt, einzelne Spulen in einer verketteten Art und Weise und von einzelnen Strängen ineinander gesetzt bzw. dazwischen gesetzt auf einen einzelnen Balken zu wickeln. Des Weiteren sind die US 2004/216302 A1, EP 0 818 874 A1 und GB 2160797 A bekannt.

### Beschreibung der Ausführungsbeispiele

Die Ausführungsbeispiele werden an Hand von mehreren Figuren beschrieben:
Figur 1a, 1b, 1c und 1d zeigen verschiedene Ansichten dreier Spulenanordnungen,
Figur 2 wie die drei Spulenanordnungen aus Figur 1a, 1b und 1c aufeinander gelegt angeordnet sind,
Figur 3 zeigt eine Schnittdarstellung durch die ersten neun Spulen aus der Figur 2 und gemäß der dort angegebenen Schnittlinie
Figur 4a wie die Spulenseiten, welche in Figur 1d rechts sind auf Spulenseiten, welche in Figur 1d links sind, gelegt werden,
Figur 4b und 5 die Anordnung der einzelnen Spulenanordnungen,
Figur 6 eine schematische Darstellung der Ordnungsanlage,
Figur 7 das Wicklungshalbzeug aus Figur 5 und Figur 6,
Figur 8 eine sogenannte zweischichtige Anordnung des Wickelkopfs,
Figur 9 eine Seitenansicht auf einen Wickelkopf,
Figur 10 eine Wickelvorrichtung,
Figur 11 wie Halbwicklungen weiter bearbeitet werden,
Figur 12 das Ergebnis der Bearbeitung,
Figur 13 die Halbwicklungen einer Phase in einer Ordnungsanlage,
Figuren 14 und 15 verschiedene Einzelheiten des verbinderseitigen Wickelkopfes.

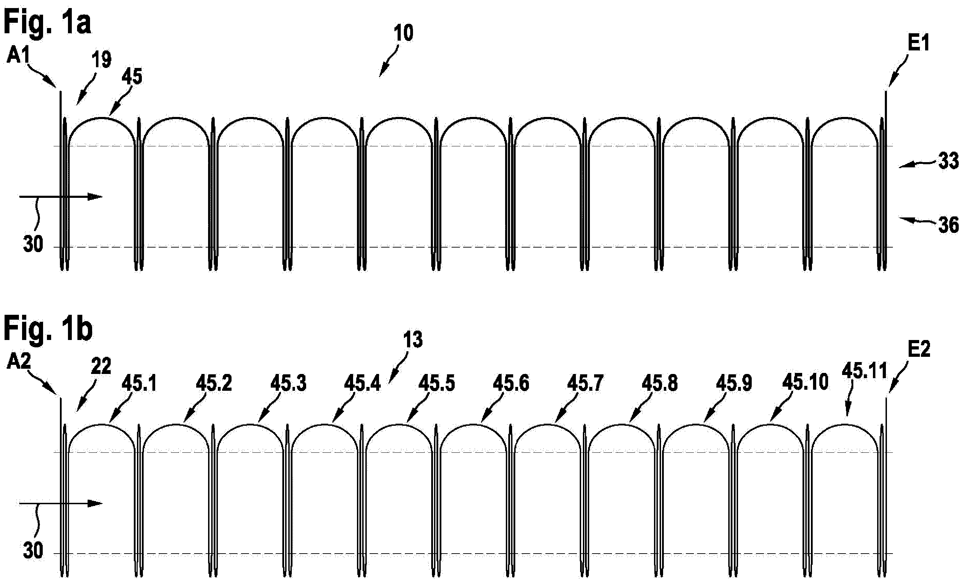

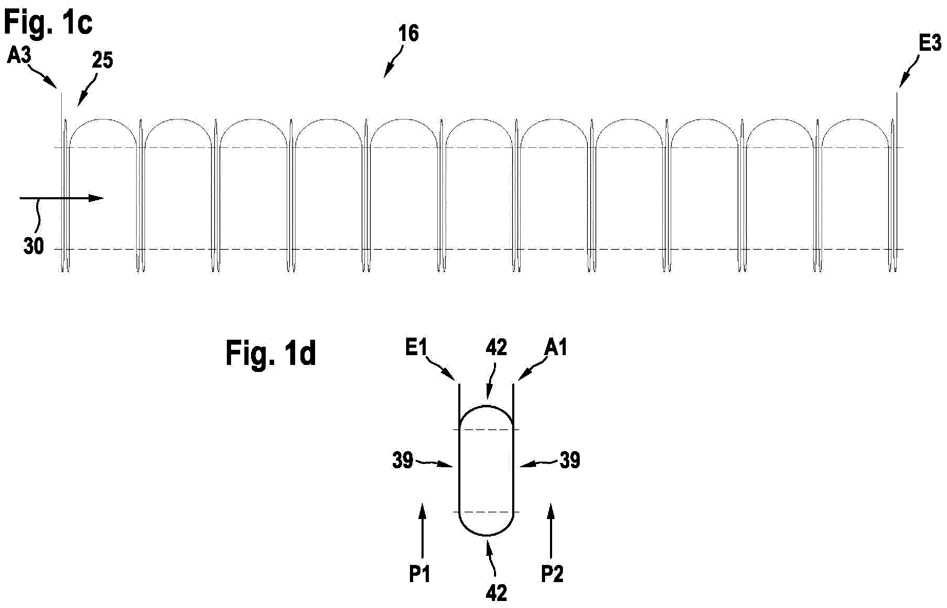

Figur 1a, 1b, 1c und 1d zeigen verschiedene Ansichten dreier Spulenanordnungen 10, 13, und 16 sowie eine Seitenansicht der Spulenanordnung 10 in Figur 1d. Diese Spulenanordnungen 10, 13 und 16 sind Zwischenformen eines in Form gebogenen Drahtes 19, 22, 25. Ausgehend von einem Drahtanfang A1 werden in eine Wicklungsrichtung 30 zwölf Spulen 33 gewickelt, die hier im Beispiel zwei Windungen 36 aufweisen. Eine jede Windung 36, d.h. eine jede Windung 36 um einen hier nicht dargestellten Pol weist zwei Spulenseiten 39 und zwei Spulenseitenverbinder 42 auf. Auf die letzte Spulenseite 39 der letzten Windung einer Spule 33 folgt ein Spulenverbinder 45, der einstückig wieder an eine Spulenseite 39 übergeht, die ein erster Abschnitt einer ersten Windung von je zwei Windungen der zweiten Spule ist. Das hier beschriebene Ausführungsbeispiel basiert auf einer zwölfspuligen Anordnung, wie es aus der Figur 1a, 1b und 1c gut erkennbar ist. Dementsprechend sind zwölf Spulen 33 gewickelt.

Nach diesem beschriebenen Prinzip für die Spulenanordnung 10 in Figur 1a wird auch für die Spulenanordnung 13 und 16 verfahren.

Die Spulenanordnungen 10, 13 und 16 sind hier für ein Ausführungsbeispiel gewählt, das zwölfpolig ist, je Spule 33 zwei Windungen 36 aufweist und schließlich als Ständerwicklung einer dreiphasigen elektrischen Maschine, vorzugsweise Drehstromgenerator bzw. Wechselstromgenerator, dient. Eine jede Spulenanordnung kann beispielsweise auch weniger Windungen 36 oder mehr Windungen 36 aufweisen, also beispielsweise nur eine Windung oder drei oder vier oder fünf oder mehr Windungen. Hat die elektrische Maschine beispielsweise einen vierzehnpoligen Rotor, so würden insgesamt vierzehn Spulen 33 je Spulenanordnung 10, 13 oder 16 vorgesehen und gefertigt werden. Hätte die elektrische Maschine beispielsweise einen sechzehnpoligen Rotor, so würden dementsprechend je Spulenanordnung 10, 13 und 16 sechzehn Spulen 33 gewickelt werden.

Das hier beschriebene Ausführungsbeispiel zur Herstellung einer Wicklung dient wie bereits erwähnt für eine elektrische Maschine mit einem Ständer mit zwölf Polen. Bei drei vorgesehenen Strängen (Phasen) bedeutet dies, dass die Maschine in ihrem Ständer 36 Nuten aufweist, in denen die Spulenseiten 39 angeordnet werden. Wäre die elektrische Maschine eine dreiphasige Maschine mit vierzehn oder sechzehn Polen, so wiese bei einer dreiphasigen bzw. dreisträngigen Anordnung der Ständer 42 oder 48 Nuten auf. Wäre die elektrische Maschine nicht dreiphasig bzw. dreisträngig, sondern beispielsweise fünfsträngig, sechssträngig oder siebensträngig, so würden insgesamt fünf, sechs oder sieben Spulenanordnungen, wie sie beispielhaft für die Spulenanordnung 10, 13 und 16 vorgeschlagen werden, vorgesehen werden müssen. Die Nutanzahl im Ständer hat dann entsprechend der Polzahl die je Spulenanordnung vorgesehen ist und der Anzahl der Stränge die vorgesehen sind, ausgewählt zu werden.

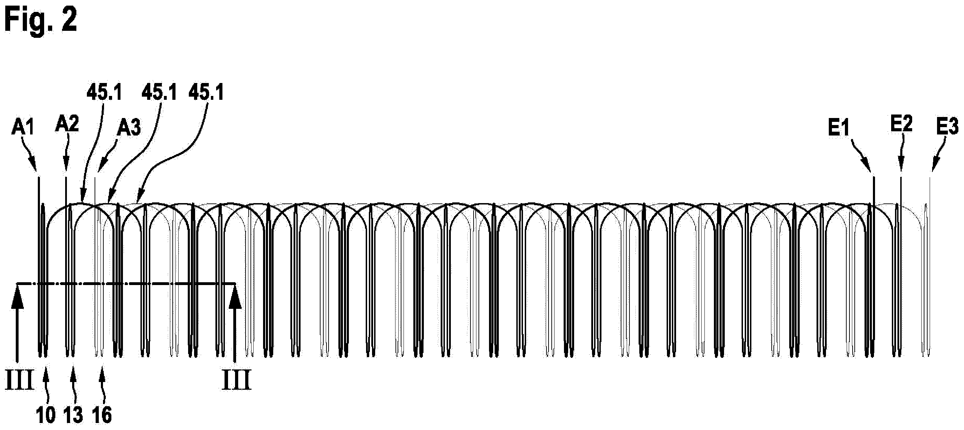

In Figur 2 ist dargestellt, wie die drei Spulenanordnungen 10, 13 und 16 aus Figur 1a, 1b und 1c aufeinander gelegt angeordnet sind. Wie aus der Zusammenschau von Figur 1a mit Figur 1d klar wird, sind die Spulenverbinder in zwei verschiedenen Ebenen angeordnet. Die Spulenverbinder 45, die hier in der Anmeldung mit der Bezugszahl 45 bezeichnet sind und denen nach einem Punkt eine ungerade Zahl nachgesetzt ist, wie 45.1 und 45.3, sind in einer ersten Ebene P1 und die Spulenverbinder, denen nach der Bezugszahl 45 und einem Punkt eine gerade Zahl nachgesetzt ist, sind in einer zweiten Ebene P2 angeordnet. Dem entsprechend liegen in Figur 2 die Spulenverbinder 45.1, 45.3, 45.5 etc. in der Ebene P1 aufeinander.

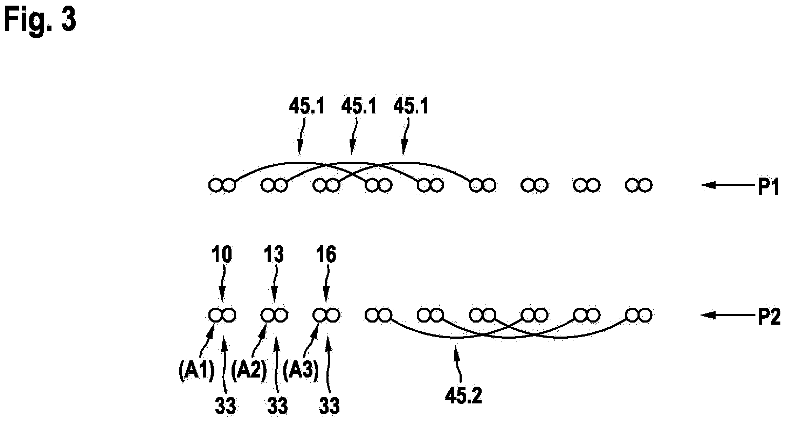

Die Figur 3 zeigt eine Schnittdarstellung durch die ersten neun Spulen 33 aus der Figur 2 und gemäß der dort angegebenen Schnittlinie. Es wird dort auch deutlich, wie die Lage der Spulenverbinder 45.1 der einzelnen Spulenanordnungen 10, 13 und 16 zueinander sind, nachdem diese Spulenanordnung 10, 13 und 16 aufeinander gelegt wurden. In Figur 3 wird auch deutlich, wie die Lage der einzelnen Spulenverbinder 45.2 der einzelnen Spulenanordnungen 10, 13 und 16 zueinander in der Ebene P2 ist. In der Ebene P1 liegen die Spulenverbinder 45 der Spulenanordnung 16 auf den Spulenverbindern 45 der Spulenanordnung 16 und auch auf den Spulenverbindern 45 der Spulenanordnung 10, des Weiteren liegen die Spulenverbinder 45 der Spulenordnung 13 auf den Spulenverbindern 54 der Spulenanordnung 10. Gleiches gilt für die Ebene P2.

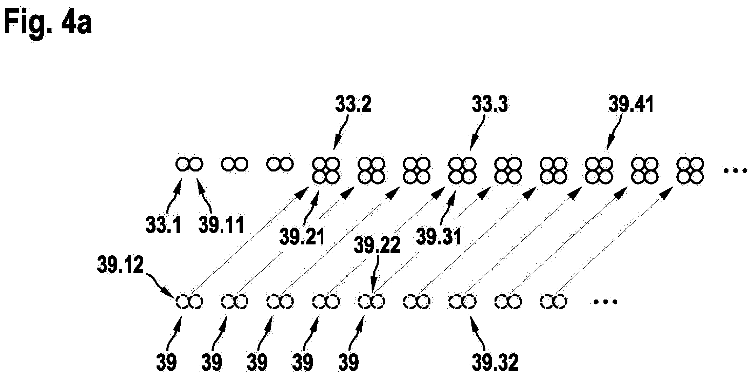

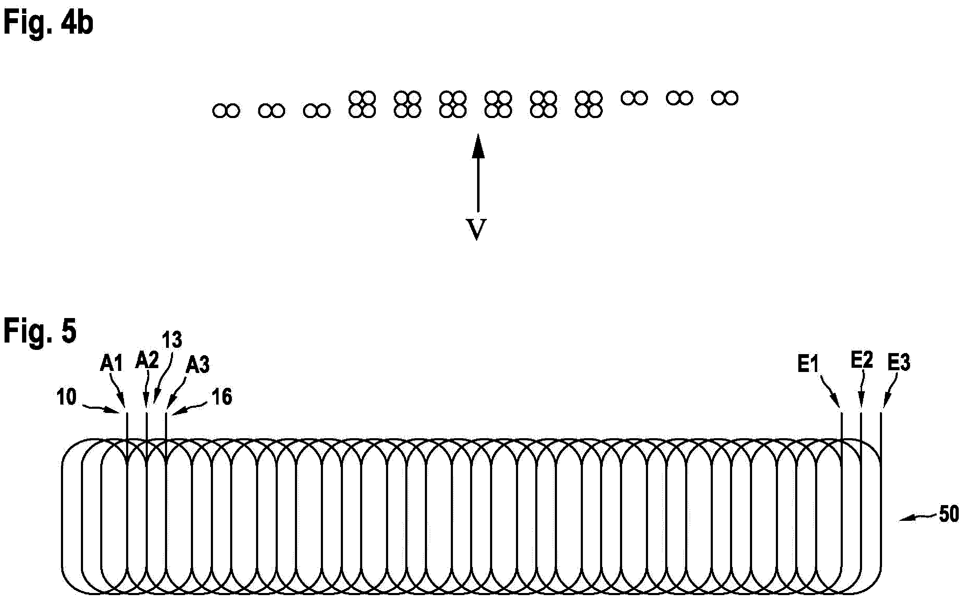

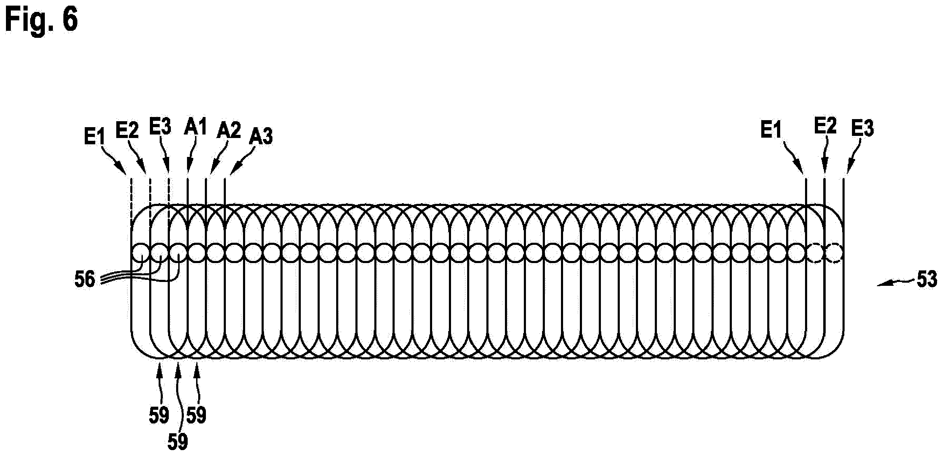

Ausgehend von der Figur 3 werden in einem weiteren Schritt, vgl. auch Figur 4a, die Spulenseiten 39, welche in Figur 1d rechts sind auf Spulenseiten 39, welche in Figur 1d links sind, gelegt. Dies erfolgt wie in Figur 4a dargestellt ist. Die erste dargestellte Spule 33.1 ist eine Spule 33 der Spulenanordnung 10. Die dritte dargestellte Spule 33, 33.2 ist die zweite Spule der Spulenanordnung 10. Jede weitere dritte Spule ist demzufolge eine Spule 33 der Spulenanordnung 10 bzw. eine Spulenseite 39 bzw. 39.11 oder Spulenseite 39.21 oder Spulenseite 39.31. Gemäß dem weiter vorgesehenen Verfahren wird auch eine Spulenseite 39 der Spulenanordnung 10 in der Ebene P2 auf eine Spulenseite 39 der Ebene P1 gelegt. Dabei wird eine Spulenseite 39 in der Ebene P2 einer ersten Spule 33 auf eine Spulenseite 39 in der Ebene P1 der nächsten Spule gelegt. Dies wird in diesem Sinne fortgeführt, wie es auch in Figur 4a dargestellt ist. Dies führt dann zur Anordnung, wie es in Figur 4b dargestellt ist. Diese Anordnung ist dann in der Seitenansicht in Figur 5 dargestellt. Diese Anordnung der einzelnen Spulenanordnung 10, 13 und 16 in dieser ineinander verschachtelten und flachen Form wird hier als Wicklungshalbzeug bezeichnet. Dieses Wicklungshalbzeug 50 wird im Anschluss in eine Ordnungsanlage 53 eingesetzt. Die Ordnungsanlage weist Stäbe 56 auf, zwischen denen jeweils, d.h. zwischen zwei unmittelbar benachbarten Stäben 56, je ein Schlitz vorgesehen ist. In einen jeden Schlitz 59 werden die Spulenseiten 39 eingesetzt oder angeordnet, die für eine Anordnung in eine Nut eines Ständers vorgesehen sind. Dementsprechend weist die Ordnungsanlage 53 sechsunddreißig Stäbe 56 bzw. Schlitze 59 auf, falls der Ständer sechsunddreißig Nuten hat. Die Ordnungsanlage 53 ist in Figur 6 schematisch dargestellt. Statt dieser schematischen Darstellung in einer Reihe ist an sich vorgesehen, dass die Ordnungsanlage 53 sechsunddreißig Stäbe 56 aufweist, die in einer Kreisform angeordnet sind. Dementsprechend sind die Schlitze 59 ebenfalls in einer Kreisform angeordnet.

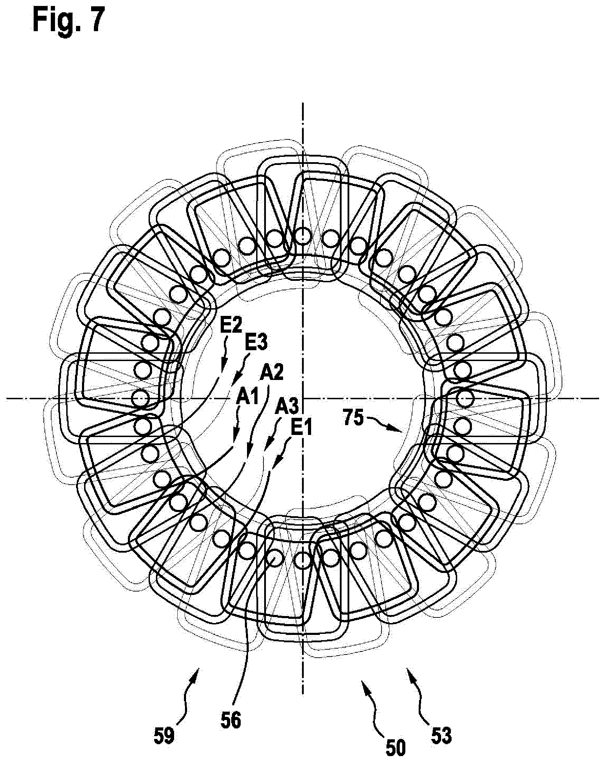

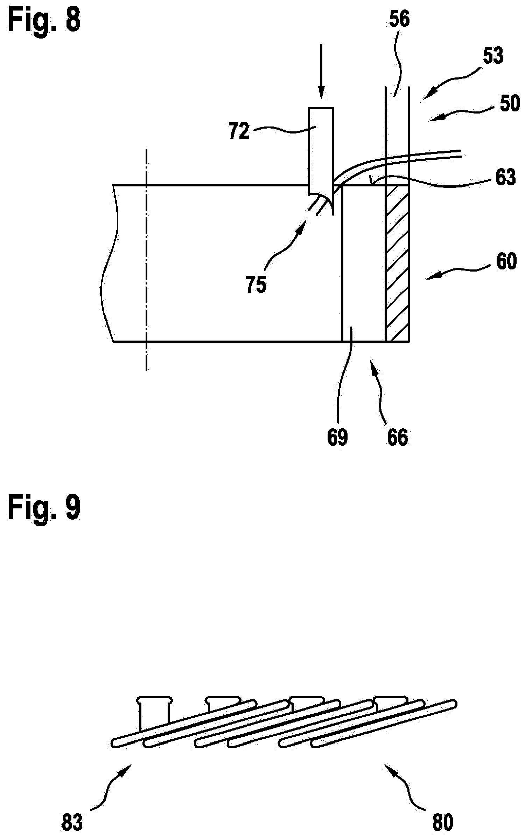

In Figur 7 ist das Wicklungshalbzeug 50 aus Figur 5 und Figur 6 so dargestellt, wie es in der runden Ordnungsanlage 53 angeordnet ist. Ausgehend von der Darstellung in Figur 7 ist der nächste Schritt, dass ein derartiges Wicklungshalbzeug 50 mit einer Ordnungsanlage 53 auf eine Stirnseite 63 eines Ständereisens 60 aufgesetzt wird. Dieses Ständereisen 60 hat die bereits erwähnten, in diesem Fall, sechsunddreißig Nuten 66 und sechsunddreißig Zähne 69. Ein Einzugswerkzeug greift in die in Figur 7 dargestellten radial inneren Schlaufen 75, und zieht an diesen Schlaufen die Spulen 33 in die Nuten 66 ein. Aufgrund der zuvor beschriebenen Anordnung des Wicklungshalbzeugs ergibt sich sowohl auf der Anschlussseite des Ständers aus Ständereisen 60 und Wicklungshalbzeug 50 als auch auf der gegenüberliegenden Seite des Ständereisens 60 jeweils eine sogenannte zweischichtige Anordnung des Wickelkopfs 80, Figur 8.

Ist das Wicklungshalbzeug 50 im Ständereisen 60 angeordnet, ist dieses Wicklungshalbzeug 50 dann die Wicklung 83, die in einem Generator das Abgreifen einer Spannung an den Enden der Spulenanordnung 10, 13 und 16, die nunmehr die sogenannten Stränge der Wicklung 83 sind.

Aus dem vorbeschriebenen Ausführungsbeispiel ist demnach ein Verfahren zur Herstellung einer mehrphasigen Wicklung für einen Stator einer elektrischen Maschine beschrieben, wobei hierzu ein Wicklungshalbzeug 50 hergestellt wird und bei der Herstellung des Wicklungshalbzeugs Wicklungsuntergruppen als Spulen 33 mit Spulenseiten 39 hergestellt werden und danach das Wicklungshalbzeit 50 so in einer Ringform angeordnet wird, dass die Wicklungsseiten, hier ausgeführt als Spulenseiten 39, in einer Ordnungsanlage 53 mit Schlitzen 59 so angeordnet werden, dass die Wicklungsseiten, hier Spulenseiten 39, unmittelbar benachbarte Wicklungsuntergruppen, hier Schleifen 33, in einen Schlitz 59 der Ordnungsanlage 53 angeordnet werden und die benachbarten Wicklungsseiten, hier Spulenseiten 39, in dem einen Schlitz 59 in unterschiedlichen Ebenen angeordnet werden.

Die Ordnungsanlage 53 hat eine Anzahl an Schlitzen 59, die in die Ordnungsanlage 53 eingebracht sind, die der Anzahl an in die das Ständereisen 60 bildenden Lamellen eingebrachten Nuten 66 entspricht.

Das so in der Ordnungsanlage 53 angeordnete Wicklungshalbzeug 50 wird gegenüber einer Stirnseite 63 des Ständereisens 60 positioniert, wobei die in einem Schlitz 59 angeordneten oder angeordnet gewesenen Wicklungsseiten, hier Spulenseiten 39 in einer Flucht mit einer Nut 66 gelegt werden und danach mittels eines Einzugswerkzeugs 72 in die Nut 66 des Ständereisens 60 eingezogen werden.

Im Falle der Ausbildung der Wicklungsuntergruppen als Spulen 33 wird eine Spulenkette pro Spulenanordnung 10 eines Strangs erzeugt, wobei N Spulenketten, d.h. Spulenanordnungen 10, 13, 16 ineinander geschoben werden, so dass die Spulen 33 der Spulenanordnungen 10, 13, 16 abwechselnd nacheinander in einer Reihe angeordnet sind, wobei Spulenverbinder 45 auf einer gemeinsamen Seite angeordnet werden und danach die Spulen 33 so verdreht werden, dass Spulenseiten 39 einer Spule 33 eines Halbzeugs in Gestalt einer Spulenanordnung 10, 13, 16 eines Strangs auf Spulenseiten 39 einer unmittelbar benachbarten Spule 33 zu liegen kommen (Figur 4a und Figur 9).

### Zweites Ausführungsbeispiel

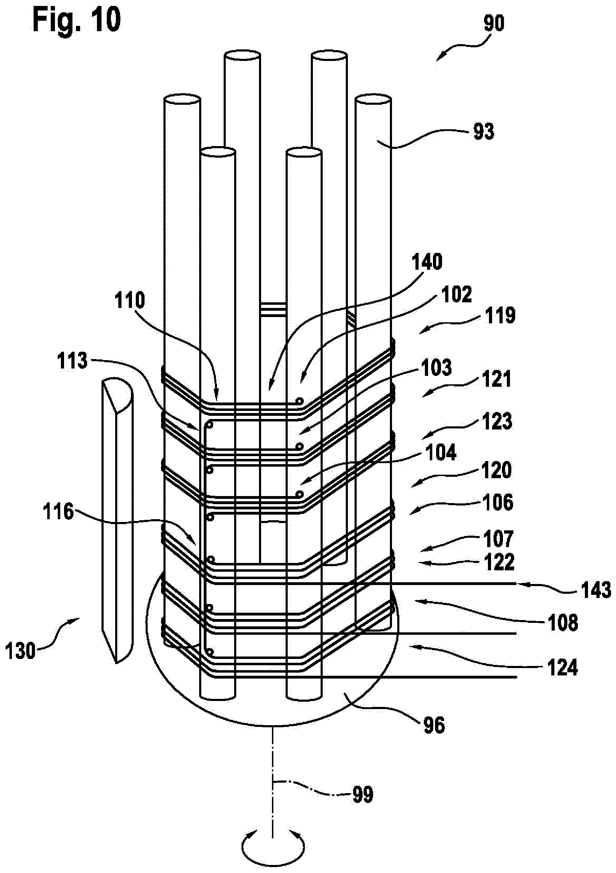

In Figur 10 ist eine Wickelvorrichtung dargestellt. Gemäß dieser Wickelvorrichtung 90 sind sechs Säulen 93 quasi im Sechseck angeordnet.
Diese sechs Säulen 93 befinden sich auf einem Träger 96, der in Säulenlängsrichtung um eine Achse 99 drehbar gelagert ist. Zur Herstellung des Wicklungshalbzeugs 50 wird zunächst beginnend bei einer Säule 93 (Startwickelsäule) der Dreht bzw. die Drähte 106, 107, 108 befestigt und die Wickelvorrichtung 90 zunächst gegen den Uhrzeigersinn drei Umdrehungen gedreht. Nach dem Erreichen eines sogenannten Umkehrpunkts 110 wird längs der hier "Umkehrpunktsäule" genannten Säule 93 ein Umkehrverbinder 113 gelegt. Dieser Umkehrverbinder 113 wird an einem weiteren Umkehrpunkt 116 nun in die entgegengesetzte Richtung mit drei Umdrehungen um die Wickelvorrichtung 90 bzw. die Säulen 93 gewickelt. Es entstehen so zwei durch einen Umkehrverbinder 113 einstückig verbundene und beabstandete Halbwicklungen 119 und 112. Diese Halbwicklungen 119 und 112 sind eine Ausgangswicklung zur Herstellung einer geteilten Wellenwicklung, die später in einem Ständer eine sogenannte verteilte Wellenwicklung ergeben bzw. sein wird. Neben diesen beiden Halbwicklungen 119 und 120 werden noch vier weitere Halbwicklungen 121 und 122 sowie 123 und 124 gewickelt werden. Diesen anderen vier Halbwicklungen 121 bis 124 werden genauso wie die ersten beiden Halbwicklungen 119 und 120 gewickelt. Die zwischen zwei Halbwicklungen 119 und 120 befinden sich auf der Wickelvorrichtung längs der Säulen 93 die beiden anderen Halbwicklungen 121 und 123, so dass in diesem Fall der Umkehrverbinder 113 der Halbwicklung 119 durch die Halbwicklung 121 überwickelt ist. Dieser Umkehrverbinder 113 ist ebenso durch die Halbwicklung 123 überwickelt. Der Umkehrverbinder zwischen den Halbwicklungen 121 und 122 ist durch die Halbwicklung 123 überwickelt.

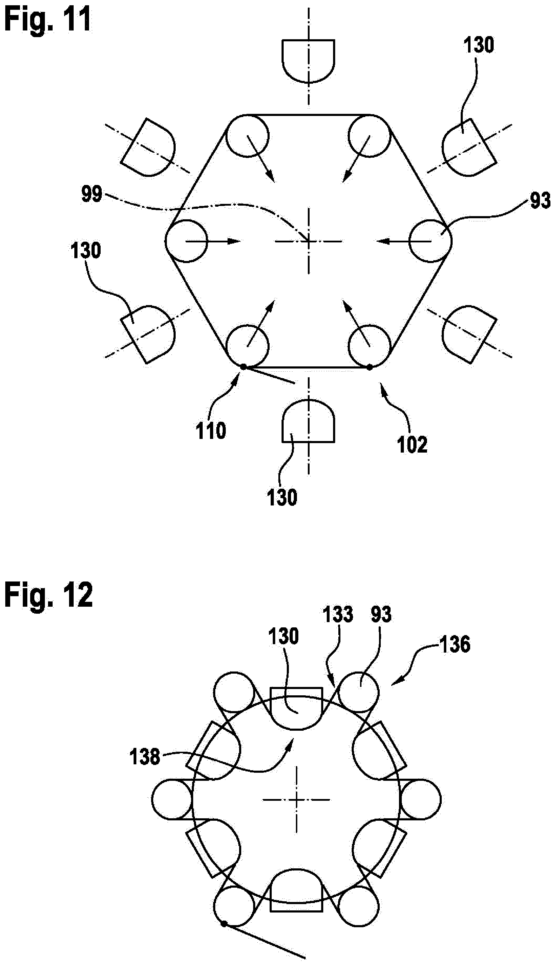

Nach dem Beenden der Wicklung der jeweils zweiten Halbwicklung 120, 122 und 124 wird die somit im Wesentlichen sechseckige Anordnung der Halbwicklungen 119 bis 124 mittels sechs um die Wickelvorrichtung 90 angeordnete Backen 130 weiter bearbeitet, Figur 11. Diese Backen 130 werden in Richtung zur Achse 99 zugestellt und dabei zusätzlich die Säulen 93 ebenfalls in Richtung auf die Achse 99 zu bewegt. Dies ist erforderlich, da die Backen 130 den Draht 106, 107 und 108 nicht verlängern, sondern lediglich anders formen. Das Ergebnis dieser Form kann in Figur 12 erkannt werden. Die Halbwicklungen 119 bis 124 sind nun jeweils als sogenannter Wicklungsstern ausgeführt. Insgesamt entstehen so sechs Wicklungssterne. Der Draht hat in diesen Wicklungssternen nunmehr die Form von Wellenseiten und Wellenseitenverbindern. Die Wellenseiten sind die Abschnitte, die sich im Wesentlichen tangential zwischen den Backen 130 und den Säulen 93 befinden. Die Wellenseiten haben hier die Bezeichnung 133. Die Abschnitte zwischen den Wellenseiten 133, die sich an den Backen 130 und den Säulen 93 entlang schmiegen, haben hier die Funktion der Wellenseitenverbinder 136 und 138. Aufgrund der bisher vorgesehen Anordnung und der bisher vorgesehen Verfahrensschritte sind alle Wicklungssterne in axialer Richtung (Achse 99) fluchtend übereinander angeordnet. Damit mittels dieser sechs Halbwicklungen 119 und 129 in Sternform eine in diesem Beispiel dreiphasige Ständerwicklung für einen Ständer einer elektrischen Maschine hergestellt werden kann, müssen die sechs Halbwicklungen zueinander versetzt angeordnet werden. Hierzu werden diese sechs Halbwicklungen 119 bis 124 von den Säulen 93 entfernt, nachdem die Backen 130 wieder nach radial außen entfernt wurden.

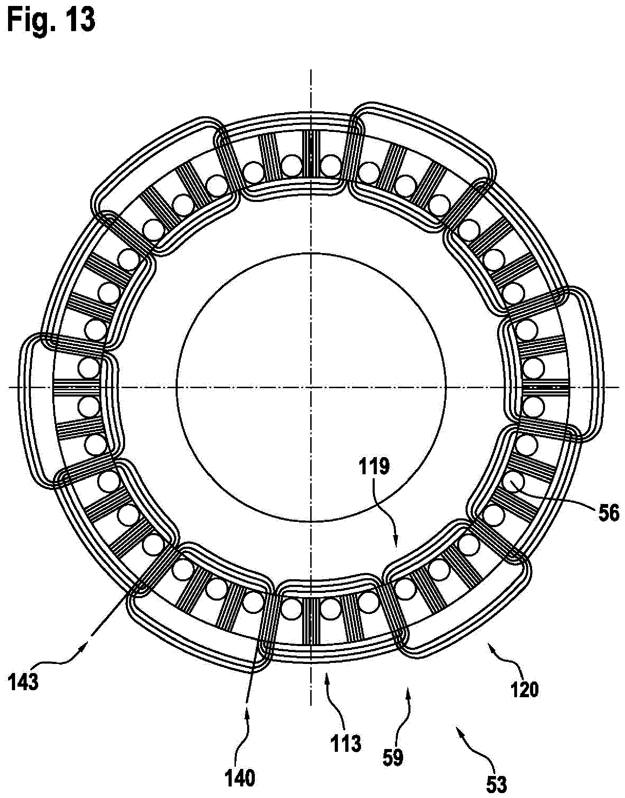

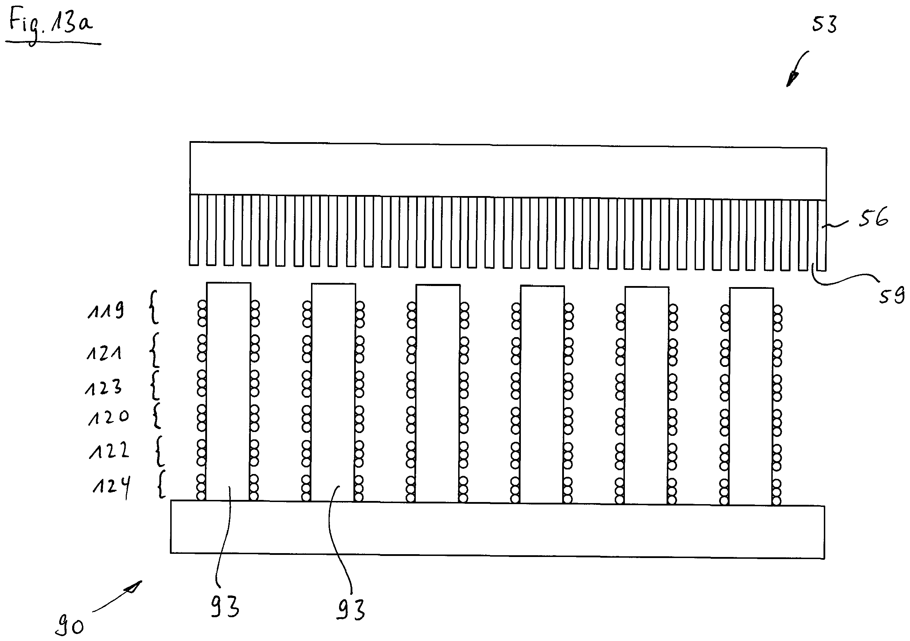

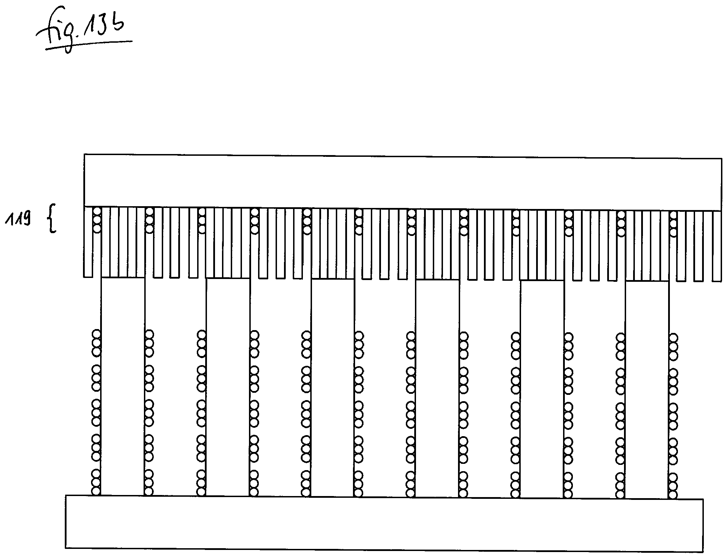

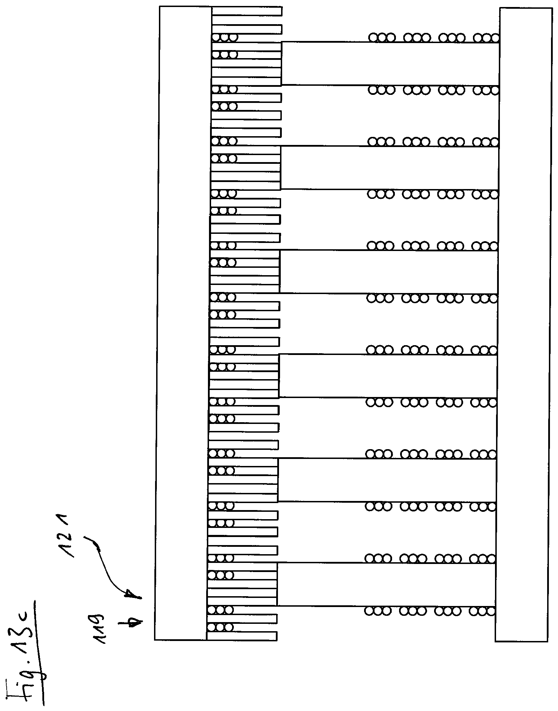

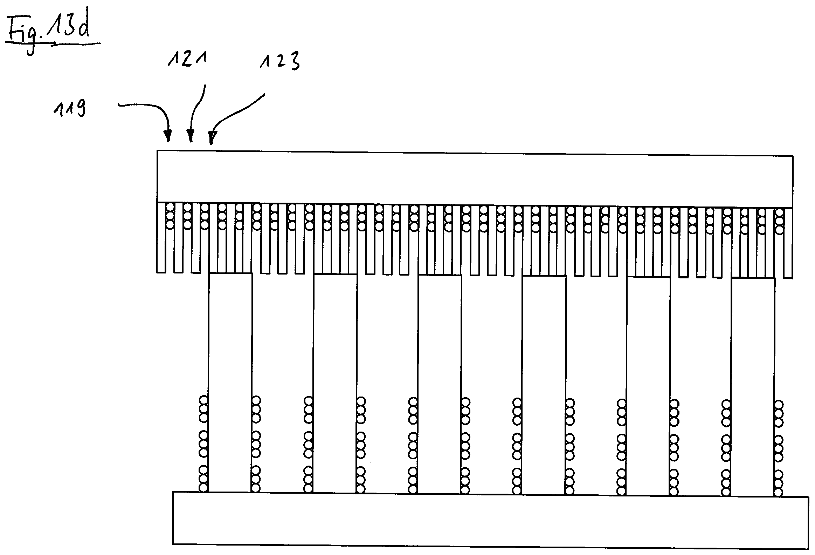

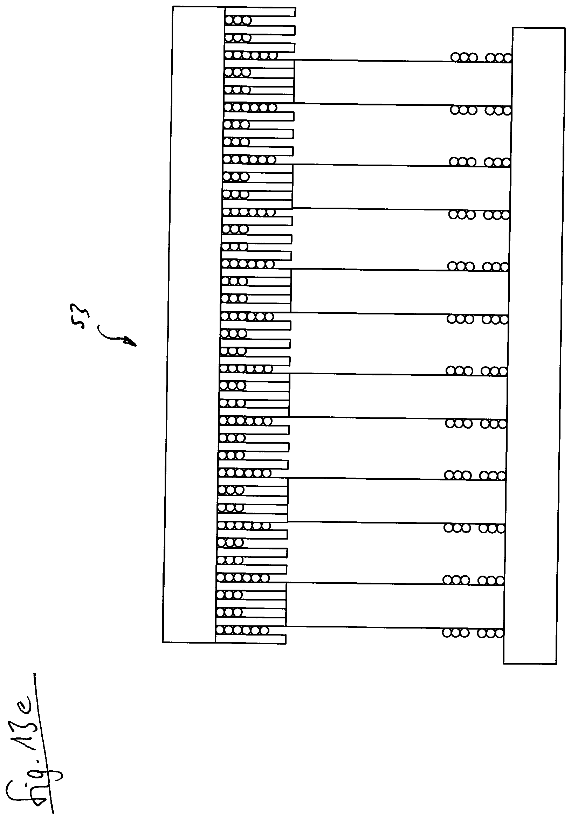

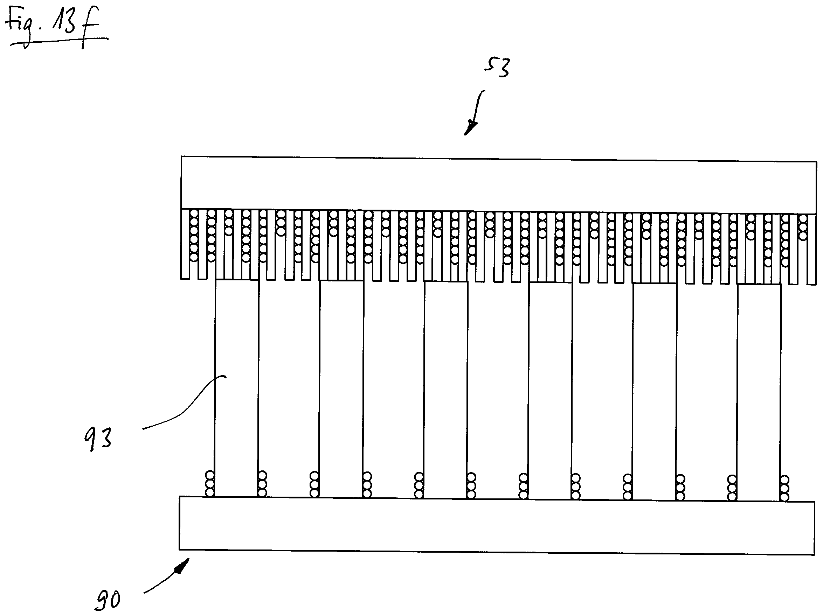

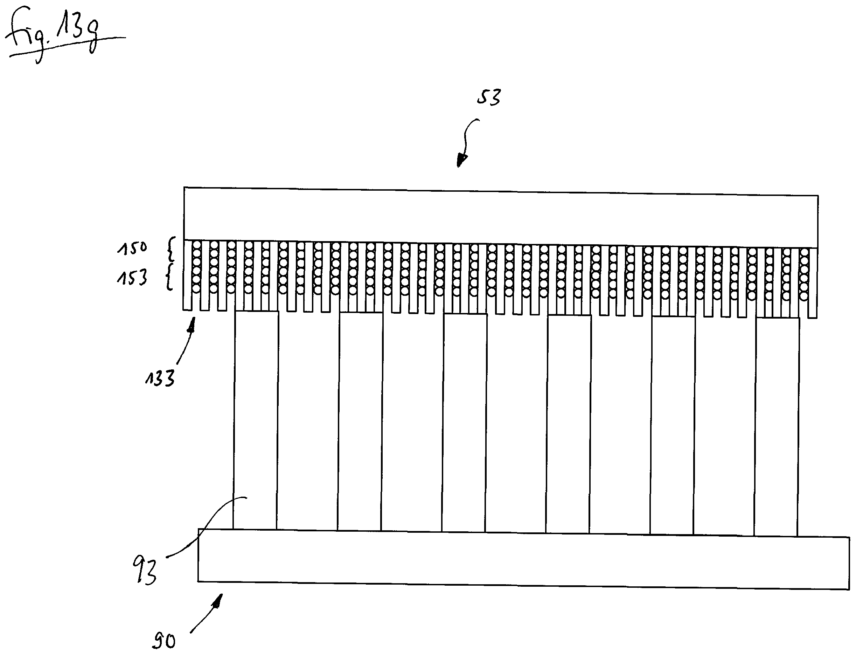

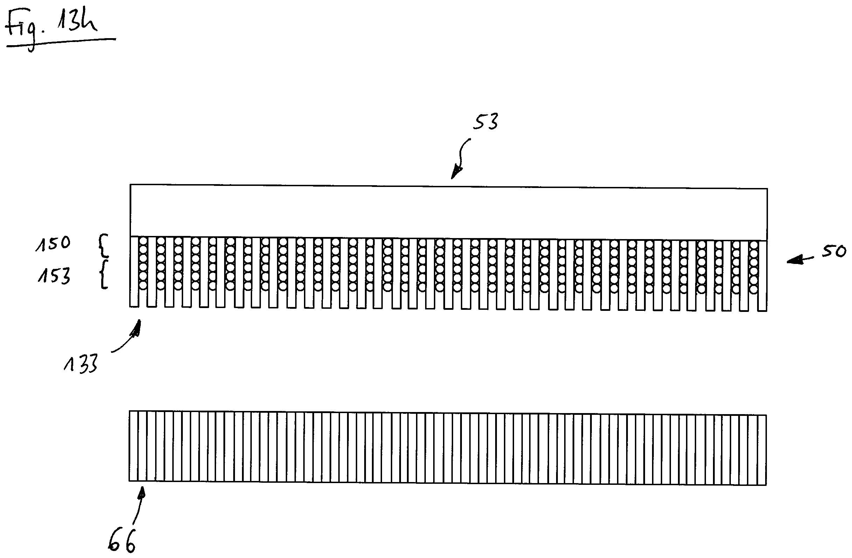

Nach dem Umsetzen in eine Ordnungsanlage 53, Figur 13, die im Wesentlichen der bereits zuvor beschriebenen Ordnungsanlage entspricht (sechsunddreißig Stäbe 56, sechsunddreißig Schlitze 59) ist in Figur 13 zunächst für eine derartige Anordnung von zwei Halbwicklungen, hier Halbwicklung 119 und Halbwicklung 120 eine übersichtliche Darstellung gegeben. Der in Figur 10 erkennbare Drahtanfang für die Halbwicklung 119 ist sowohl in Figur 10 als auch in Figur 13 mit Bezugszahl 140 bezeichnet. Das in Figur 10 mit der Bezugszahl 143 bezeichnete Drahtende befindet sich ebenfalls in Figur 13. Der Umkehrverbinder 113 ist dort ebenfalls zu erkennen und befindet sich hier am Außenumfang der Ordnungsanlage 53.

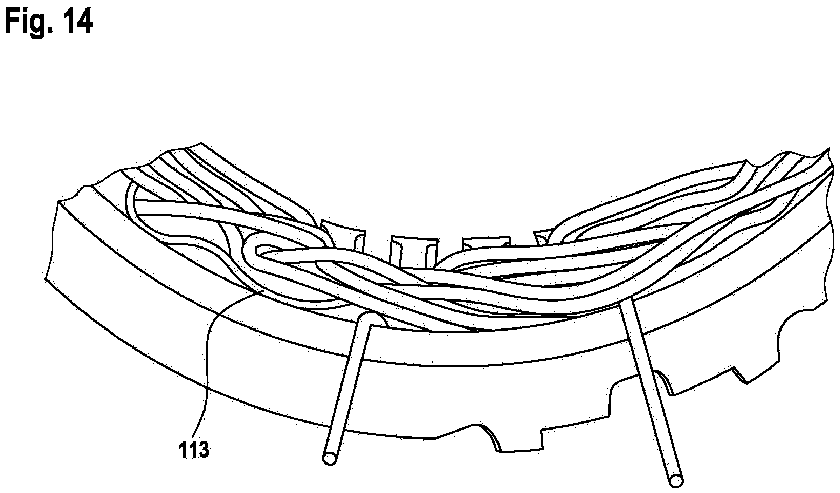

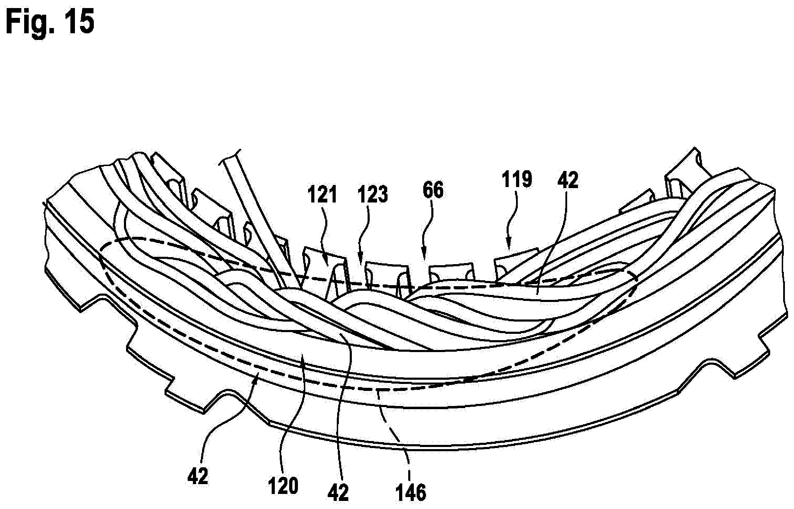

Aus den Figuren 14 und 15 sind verschiedene Einzelheiten des verbinderseitigen Wickelkopfes zu erkennen. So sind die den Wickelkopf ausmachenden Spulenseitenverbinder 42 zweischichtartig angeordnet. Diese zweischichtartige Anordnung ist innerhalb der gestrichelten Linie 146 erkennbar und rührt daher, dass die Spulenseitenverbinder 42 einer Teilwicklung 120 und eines Strangs und die Spulenseitenverbinder 42 einer anderen Teilwicklung 119 desselben Strangs, die in die selbe Nut hinein verlaufen zwischen sich die Spulenseitenverbinder 42 anderer Stränge aufnehmen, vgl. auch die räumliche Situation bei der Nut 66.

## Patentansprüche

1. Verfahren zur Herstellung einer mehrphasigen Wicklung (83) für einen Stator einer elektrischen Maschine, mittels einer Wicklungsvorrichtung (90), wobei hierzu ein Wicklungshalbzeug (50) hergestellt wird und bei der Herstellung des Wicklungshalbzeugs (50) mehrere Stränge der Wicklung (83) und hierbei von einem jeden Strang der Wicklung zwei elektrisch in Reihe verbundene Halbwicklungen (119, 120, 121, 122, 123, 124) hergestellt werden, wobei eine jede Halbwicklung (119, 120, 121, 122, 123, 124) mit Wicklungsuntergruppen als Wellen mit Wellenseiten (133) in Gestalt eines Wicklungssterns hergestellt wird, **dadurch gekennzeichnet, dass**
die Halbwicklungen (119, 120, 121, 122, 123, 124) der Stränge derart in einem Stapel angeordnet werden, dass in eine Stapelrichtung auf eine erste Halbwicklung (124) eines ersten Strangs unmittelbar eine erste Halbwicklung (122) eines anderen Strangs und auf diese unmittelbar eine erste Halbwicklung (120) eines weiteren Strangs folgt und durch die ersten Halbwicklungen (120, 122, 124) ein erster Teilstapel gebildet wird,
wobei in die gleiche Stapelrichtung auf dem ersten Teilstapel ein zweiter Teilstapel gebildet wird und dabei eine zweite Halbwicklung (123) des ersten Strangs und unmittelbar darauf eine zweite Halbwicklung (121) des anderen Strangs und auf diese Halbwicklung (121) unmittelbar eine zweite Halbwicklung (119) des weiteren Strangs gewickelt wird.

2. Verfahren nach Anspruch 1, **dadurch gekennzeichnet, dass** die Halbwicklungen (119, 120, 121, 122, 123, 124) von der Wicklungsvorrichtung (90) herunter einzeln in eine Ordnungsanlage (53) mit Schlitzen (59) übernommen werden,
wobei zunächst die zweite Halbwicklung (119) des weiteren Strangs in eine Gruppe von Schlitzen (59) übertragen wird, die der zweiten Halbwicklung (119) des weiteren Strangs zugeordnet ist, und danach
die zweite Halbwicklung (119) des anderen Strangs in eine Gruppe von Schlitzen (59) übertragen wird, die der zweiten Halbwicklung (119) des anderen Strangs zugeordnet ist, und danach
die zweite Halbwicklung (121) des ersten Strangs in eine Gruppe von Schlitzen (59) übertragen wird, die der zweiten Halbwicklung (121) des ersten Strangs zugeordnet ist,
wobei die Schlitze (59) der Gruppe von Schlitzen (59) der zweiten Halbwicklung (119) des weiteren Strangs von den Schlitzen (59) der Gruppe von Schlitzen (59) der zweiten Halbwicklung (119) des anderen Strangs beabstandet sind und die Schlitze (59) der Gruppe von Schlitzen (59) der zweiten Halbwicklung (121) des ersten Strangs von den Schlitzen (59) der Gruppe von Schlitzen (59) der zweiten Halbwicklung (119) des weiteren Strangs beabstandet sind.

3. Verfahren nach Anspruch 2, **dadurch gekennzeichnet, dass** nach dem übernehmen der Halbwicklungen (119, 121, 123) des zweiten Teilstapels die Halbwicklungen (120, 122, 124) des ersten Teilstapels in die Ordnungsanlage (53) mit Schlitzen (59) übernommen werden.

4. Verfahren nach Anspruch 3, **dadurch gekennzeichnet, dass** zunächst die erste Halbwicklung (120) des weiteren Strangs in die Gruppe von Schlitzen (59) übertragen wird, in die die zweite Halbwicklung (119) des weiteren Strangs übertragen wurde, und danach
die erste Halbwicklung (122) des anderen Strangs in die Gruppe von Schlitzen (59) übertragen wird, in die die zweite Halbwicklung (121) des anderen Strangs übertragen wurde, und danach
die erste Halbwicklung (124) des ersten Strangs in die Gruppe von Schlitzen (59) übertragen wird, in die die zweite Halbwicklung (123) des ersten Strangs übertragen wurde.

5. Verfahren nach Anspruch 4, **dadurch gekennzeichnet, dass** eine Relativlage der Wellenseiten (133) einer Halbwicklung (119, 120, 121, 122, 123, 124) eines Strangs untereinander auf der Wicklungsvorrichtung (90) durch das Übertragen in die Schlitze (59) in der Ordnungsanlage (53) übertragen wird.

6. Verfahren nach Anspruch 5, **dadurch gekennzeichnet, dass** die Wellenseiten (133) der Halbwicklungen (119, 120, 121, 122, 123, 124) in einem Vorgang, vorzugsweise aus allen Schlitzen (59) gleichzeitig, in ein Ständereisen (60) eingezogen werden.

7. Verfahren nach einem der vorstehenden Ansprüche, **dadurch gekennzeichnet, dass** die Schlitze (59) in der Ordnungsanlage (53) vor dem Übernehmen aller Halbwicklungen (119, 120, 121, 122, 123, 124) der Stränge im Kreis angeordnet werden.

8. Verfahren nach einem der vorstehenden Ansprüche, **dadurch gekennzeichnet, dass** das Wicklungshalbzeug in zwei Schichten angeordnet wird.

## Claims

1. Method for producing a multiphase winding (83) for a stator of an electric machine, by means of a winding device (90), wherein a semi-finished winding product (50) is produced and in the production of the semi-finished winding product (50) a plurality of strands of the winding (83) and from each strand of the winding two half-windings (119, 120, 121, 122, 123, 124) electrically connected in series are produced,
each half-winding (119, 120, 121, 122, 123, 124) having winding subgroups being made produced as shafts with shaft sides (133) in the form of a winding star,
**characterized in that** the half-windings (119, 120, 121, 122, 123, 124) of the strands are arranged in a stack such that in a stacking direction on a first half-winding (124) a first strand is directly followed by a first half-winding (122) of another strand which in turn is immediately followed by a first half-winding (120) of a further strand, and a first partial stack is formed by the first half-windings (120, 122, 124),
wherein in the same stacking direction on the first partial stack a second partial stack is formed and therein a second half-winding (123) of the first strand and immediately thereafter a second half-winding (121) of the other strand and on this half-winding (121) immediately a second half-winding (119) of the further strand are wound.

2. Method according to claim 1, **characterized in that** the half windings (119, 120, 121, 122, 123, 124) are individually transferred from the winding device (90) into an arranging system (53) with slots (59),
wherein firstly the second half-winding (119) of the further strand is transferred into a group of slots (59) which is associated with the second half-winding (119) of the further strand, and then the second half-winding (119) of the other strand is transferred into in a group of slots (59) which is associated with second half-winding (119) of the other strand, and thereafter
the second half-winding (121) of the first strand is transferred into a group of slots (59) which is associated with the second half-winding (121) of the first strand,
wherein that the slots (59) of the group of slots (59) of the second half-winding (119) of the further strand are spaced from the slots (59) of the group of slots (59) of the second half-winding (119) of the other strand, and the slots (59) of the group of slots (59) of the second half winding (121) of the first strand are spaced from the slots (59) of the group of slots (59) of the second half winding (119) of the further strand.

3. A method according to claim 2, **characterized in that** after transferring the half-windings (119, 121, 123) of the second partial stack, the half-windings (120, 122, 124) of the first partial stack are transferred into the arrangement system (53) with slots (59).

4. Method according to claim 3, **characterized in that** firstly the first half winding (120) of the further strand is transferred into the group of slots (59) into which the second half winding (119) of the further strand has been transferred, and then
the first half winding (122) of the other strand is transferred into the group of slots (59) into which the second half-winding (121) of the other strand has been transferred, and thereafter
the first half-winding (124) of the first strand is transferred into the group of slots (59) into which the second half winding (123) of the first strand has been transferred.

5. A method according to claim 4, **characterized in that** an arrangement of the shaft sides (133) of a half-winding (119, 120, 121, 122, 123, 124) of a strand relative to each other on the winding device (90) is transferred by the transfer into the slots (59) in the arranging system (53).

6. A method according to claim 5, **characterized in that** the shaft sides (133) of the half-windings (119, 120, 121, 122, 123, 124) are retracted into a stator iron (60) in one operation, preferably from all the slots (59) at the same time.

7. Method according to one of the preceding claims, **characterized in that** the slots (59) in the arranging system (53) are arranged in a circle before transferring all half-windings (119, 120, 121, 122, 123, 124) of the strands.

8. Method according to one of the preceding claims, **characterized in that** the semi-finished winding product is arranged in two layers.

## Revendications

1. Procédé de préparation d'un enroulement à phases multiples (83) pour un stator d'une machine électrique, au moyen d'un dispositif d'enroulement (90), dans lequel, à cet effet, un demi-produit d'enroulement (50) est produit et dans la préparation de le demi-produit d'enroulement (50) une pluralité de brins de l'enroulement (83), et dans ce cas à partir de chaque brin de l'enroulement deux demi-enroulements (119, 120, 121, 122, 123, 124) connectés électriquement en série, sont produites, dans lequel chaque demi-enroulement (119, 120, 121, 122, 123, 124) est préparé avec sous-groupes d'enroulement sous forme des arbres avec côtés des arbres (133) sous la forme d'une étoile d'enroulement,
**caractérisé en ce que**
les demi-enroulements (119, 120, 121, 122, 123, 124) des brins sont disposés en un empilement de telle façon, que, dans une direction d'empilement un premier demi-enroulement (124) d'un premier brin est immédiatement suivie d'un premier demi-enroulement (122) d'un autre brin et lequel est immédiatement suivie d'un un premier demi-enroulement (120) d'un différent brin, une première pile partielle étant formée par les premiers demi-enroulements (120, 122, 124),
dans lequel un second sous-empilement est formé dans la même direction d'empilage comme le premier sous-empilement, et dans ce cas un second demi-enroulement (123) du premier brin immédiatement au-dessus un second demi-enroulement (121) de l'autre brin, et immédiatement au-dessus lequel un second demi-enroulement (121) de le différent brin est enroulé.

2. Procédé selon la revendication 1, **caractérisé en ce que** les demi-enroulements (119, 120, 121, 122, 123, 124) sont individuellement transférés à bas de le dispositif d'enroulement (90) vers une unité de commande (53) avec des fentes (59),
dans lequel initialement le second demi-enroulement (119) de le diffèrent brin est transféré vers un groupe de fentes (59) qui est associé à la second demi-enroulement (119) de le diffèrent brin, et ensuite
le second demi-enroulement (119) de l'autre brin est transféré vers un groupe de fentes (59) qui est associé à le second demi-enroulement (119) de l'autre brin, et ensuite
le second demi-enroulement (121) du premier brin est transféré vers un groupe de fentes (59) qui est associé à le second demi-enroulement (121) du premier brin, dans lequel les fentes (59) du groupe de fentes (59) de le second demi-enroulement (119) de le différent brin sont placés à distance vers les fentes (59) du groupe de fentes (59) de le second demi-enroulement (119) de l'autre brin et les fentes (59) du groupe de fentes (59) de le second demi-enroulement (121) du premier brin sont placés à distance vers les fentes (59) du groupe de fentes (59) de le second demi-enroulement (119) de le différent brin.

3. Procédé selon la revendication 2, **caractérisé en ce que** après que les demi-enroulements (119, 121, 123) de le second sous-empilement sont adoptés les demi-enroulements (120, 122, 124) de le première sous-empilement sont adoptés dans le système de commande (53) avec des fentes (59).

4. Procédé selon la revendication 3, **caractérisé en ce que** initialement la première demi-enroulement (120) de le différent brin est transféré vers la groupe de fentes (59) dans lequel le second demi-enroulement (119) de le différent brin a été transféré, et ensuite
le premier demi-enroulement (122) de l'autre brin est transféré vers la groupe de fentes (59) dans lequel le second demi-enroulement (121) de l'autre brin a été transféré, et ensuite
le premier demi-enroulement (124) du premier brin est transféré vers la groupe de fentes (59) dans lequel le second demi-enroulement (123) du premier brin a été transféré.

5. Procédé selon la revendication 4, **caractérisé en ce que** une position relative des côtés des arbres (133) d'un demi-enroulement (119, 120, 121, 122, 123, 124) d'un brin est transféré entre eux sur le dispositif d'enroulement (90) en transférant vers les fentes (59) dans le système de commande (53).

6. Procédé selon la revendication 5, **caractérisé en ce que** les côtés de l'arbre (133) des demi-enroulements (119, 120, 121, 122, 123, 124) sont rétractés en une seule opération, de préférence de toutes les fentes (59) simultanément, dans un fer du stator (60).

7. Procédé selon l'une quelconque des revendications précédentes, **caractérisé en ce que** les fentes (59) dans l'unité de commande (53) avant d'accepter toutes les demi-enroulements (119, 120, 121, 122, 123, 124) des brins sont disposés en un cercle.

8. Procédé selon l'une quelconque des revendications précédentes, **caractérisé en ce que** le demi-produit d'enroulement est disposée en deux couches
